# EUROPEAN PATENT SPECIFICATION

(11) **EP 3 221 775 B1**
(45) Date of publication and mention of the grant of the patent: **26.09.2018**
(21) Application number: 15797677.0
(22) Date of filing: 20.11.2015
(51) Int. Cl.: G06F 3/038, G06F 3/044, G06F 3/0354, G06F 3/041

(54) **ACTIVE STYLUS WITH ASYMMETRIC SWITCHING STATES**
AKTIVER STIFT MIT ASYMMETRISCHEN SCHALTZUSTÄNDEN
STYLET ACTIF AVEC ÉTATS DE COMMUTATION ASYMÉTRIQUES

(30) Priority: 20.11.2014 DE 102014223680
(43) Date of publication of application: 27.09.2017
(73) Proprietor: Stabilo International GmbH, 90562 Heroldsberg (DE)
(72) Inventor: KÄMPF, Karl-Peter, 91341 Röttenbach (DE); KOLLENDA, Gerald, 91466 Gerhardshofen (DE)
(74) Representative: Grünecker Patent- und Rechtsanwälte PartG mbB
(86) International application number: PCT/EP2015/077254
(87) International publication number: WO 2016/079314

(56) References cited:
- US-A1- 2011 304 577
- US-A1- 2012 327 040
- US-A1- 2013 113 754

## Description

### State of the art

The invention relates to a device of the type as specified in the preamble of patent claim 1, a method as specified in the preamble of patent claim 5, and a system as specified in the preamble of patent claim 9.

Modern digital computers can be controlled via a touch-sensitive input surface. Particularly widespread are capacitive systems. Here, for example, a grid of transparent conductor paths, which is applied to the underside of the cover plate of the screen, is set under an alternating voltage.

When a user's finger approaches a node of the grid, the fingers and the conductor paths form the two plates of a capacitor, and the cover plate of the screen its dielectric.

Due to the conductor paths being part of an RC element, i.e. being part of a circuit with a Resistor and a Capacitor, the change in capacitance due to the approach of the finger can be measured, and thus the contact point can be determined.

The disadvantage hereby is that a touch by a finger, a portion of the hand or a stylus, in particular by an electronic stylus, cannot be unambiguously distinguished by the sensor system. Under these circumstances it may become impossible to properly write on a touch-sensitive screen with an electronic stylus while a hand is resting on the screen, since the hand rest can be misunderstood as a second, equivalent signal.

US 2012/327040 A1 discloses a stylus producing a pulsed touch signal at a predetermined frequency which allows a touch panel to recognize that it is receiving touch input from a stylus instead of other touch objects such as a finger. A pulsed touch signal can be generated by incorporating a switch in the conductive path connecting the conductive tip to ground and programming a controller to turn the switch on (tip connected to ground when held by a grounded user) and off (tip isolated from the shaft).

### Problem

It is therefore the object of the present invention to improve an electronic stylus for a digital input device, especially with respect to the accuracy, latency and efficiency of the recognition of inputs to the digital input device carried out by means of an electronic stylus.

### Solution

According to the present invention, this object is achieved by an electronic stylus according to claim 1, a method according to claim 5 and a system according to claim 9. Advantageous embodiments and further developments are the subject matter of the subclaims.

An electronic stylus according to the invention for performing inputs to a digital input device with an electrically capacitively acting touch-sensitive input surface can be configured such that the electronic stylus can assume at least two states with different electrical capacitances and is able to switch alternately between said different states with different electrical capacitances.

Furthermore, said electronic stylus can be configured and adapted for carrying out the switching between states of the electronic stylus with different electric capacitances such that the state duration for a first state with a first electrical capacitance is longer than the state duration for a second state with a second electrical capacitance.

Preferably, the value of the first electrical capacitance of the first state of the electronic stylus thereby can be larger than the value of the second electrical capacitance of the second state of the electronic stylus. In the following, for simplicity, it is assumed that the value of the first electrical capacitance is larger than the value of the second electrical capacitance.

The switching between said two states or switching states of the electronic stylus with different electrical capacitances thus can be carried out not symmetrically. Therefore longer state durations for a first state of the electronic stylus with a first electrical capacitance, followed by shorter state durations for a second state of the electronic stylus with a second electrical capacitance can be realized.

In the following the term capacitance is to be strictly understood as referring to electrical capacitances.

This asymmetric capacitance modulation advantageously allows to distinguish between touch signals of the touch-sensitive input surface of the digital input device caused by the stylus from other touch signals caused for example by body parts such as hands or fingers of the user, or by other items or objects which do not exhibit capacitance modulations.

Above all, such a stylus, as illustrated below, allows improving the latency of the detection of a touch signal of the touch-sensitive input surface of a digital input device which has a sleep mode and an active mode.

For example, measurement queries for changes in capacitance or capacitance measurements of the touch-sensitive input surface can hereby be carried out both in sleep mode and in active mode, but with different measuring frequencies.

For example, in sleep mode, measurement queries for changes in capacitance or capacitance measurements of the touch-sensitive input surface can be carried out with a sleep measurement frequency, e.g. with 25 Hz, which is lower than an active measurement frequency, e.g. of 60 Hz, with which capacitance measurements of the touch-sensitive input surface in active mode of the digital input device can be carried out.

If, for example, it is defined that the value of the first electrical capacitance can trigger a touch signal or a touch event, in particular a touch signal or touch event in the sleep mode of the digital input device, for example in order to be able to initiate a change of the digital input device into an active mode, said change of the digital input device into the active mode can be detected more quickly

This is because that due to the state duration of the first electrical capacitance, which is longer than the state duration of the second electrical capacitance, which in the present exemplary case does not initiate a change into the active mode of the digital input device, the state of the electronic stylus with the first electrical capacitance is detected more safely and more quickly by the digital input device also in the sleep mode of the digital input device, since said state of the electronic stylus with the first electrical capacitance can last sufficiently long.

In other words the incidence of unrecognized touch signals or touch events in a sleep mode of the digital input device can thereby be reduced.

Thus, for the user unpleasant and irritating latencies in the reaction of the digital input device to the use of the electronic stylus can advantageously be avoided and for example latencies less than 50 ms or less then 30 ms can be achieved.

Furthermore an electronic stylus according to the invention can advantageously also allow an improved resolution of the touch signal of the stylus, since for example the longer lasting first state of the electronic stylus with the first electrical capacitance can be resolved with several measurement queries or measurement points of the digital input device, especially in the active mode of the digital input device.

The electronic stylus can, moreover, have a writing pressure sensor, and can be configured such that the state duration of the state of the electronic stylus with a first electrical capacitance is adjustable in dependence of a writing pressure measured by said writing pressure sensor.

For example, it is conceivable that at a measured writing pressure below a predetermined writing pressure threshold, the state duration of the state of the electronic stylus with a first electrical capacitance is reduced, so that for example the state of the first electrical capacitance, after only a few, for example 3 or 4, measuring points, can be switched off, or can be switched to the second state of the electronic stylus having a second electrical capacitance.

At a measured writing pressure above a predetermined writing pressure threshold, for example, however, the state duration of the state of the electronic stylus with a first electrical capacitance can be extended, such that said capacitance state can be resolved with even more measurement points, for example with 10 to 20 measurement points.

This may advantageously serve to better distinguish the touch signal of the stylus on the touch-sensitive input surface of the digital input device from other touch signals and can lead to an improved resolution of the touch signal of the stylus, e.g. can lead to an improved resolution and recognition of handwriting.

Therein it can be advantageous, for example, to define a maximum length of the state duration of the state of the electronic stylus with a first electrical capacitance, e.g. to be limited to state durations of equal to or less than 100 ms, such that the distinction between a touch signal of the stylus and a touch signal not caused by the stylus, for example caused by a user's hand, can be carried out sufficiently rapid, without unpleasant latencies for the detection of touch signals of the stylus.

Thus, e.g. an optimal ratio between the number of measurement points of the first electrical capacitance and the detection time of the touch signal origin can advantageously be achieved.

It is also conceivable that, for example, evaluation software e.g. executed by the digital input device, counts the number of continuous measuring points with a first electrical capacitance and thus can draw conclusions about the writing pressure of the stylus.

In general, measurements of capacitance or the capacitance values of the electronic stylus by the digital input device operating with an alternating voltage of, for example, 190-270 kHz, can be obtained from measuring queries or measuring pulses with durations of 100 to 400 µs (microseconds). Further, the digital input device can detect and measure changes in capacitance in the range of a few picofarads.

Further, the electronic stylus can comprise a manually operable option switch, wherein said option switch can be configured to set the state duration of the state of the electronic stylus with a first electrical capacitance.

In this way, for example, various predetermined state durations of the state of the electronic stylus with a first electrical capacitance can activate different writing options of the electronic stylus in interaction with the digital input device, for example, different writing colors or line strengths or other character or color effects.

Said option switch may be implemented, for example, as a switch, a button, a touch-sensitive surface or as a proximity sensor.

It would be conceivable, for example, that the option switch may cause a microcontroller to initiate a change into a new stylus mode, which can for example have a different state duration and / or different state durations of the state of the electronic stylus with a first and / or second electrical capacitance.

Therein, for example, the digital input device can via averaging over several state sequences or state cycles measure the state durations and adjust the control of the graphics display accordingly.

A method according to the invention for performing inputs to a digital input device with an electrically capacitively acting touch-sensitive input surface via an electronic stylus can comprise in particular the following steps:
An alternating switching of the electronic stylus between a first state of the electronic stylus with a first electrical capacitance and a second state of the electronic stylus with a second electrical capacitance, wherein the state duration for the first state with the first electrical capacitance can be longer than the state duration of the second state with the second electrical capacitance.

Therein the value of the first electrical capacitance of the first state of the electronic stylus can be larger than the value of the second electrical capacitance of the second state of the electronic stylus.

As mentioned earlier, the digital input device can, for example, have a sleep mode and an active mode, wherein in the active mode the measurement frequency, the active measurement frequency, for measuring changes in capacitance on the touch-sensitive input surface, can lie above the measurement frequency to measure changes in capacitance on the touch-sensitive input surface in the sleep mode, the sleep measurement frequency.

In addition, the state duration of the first state of the electronic stylus with a first electrical capacitance can be longer than the duration of a measurement cycle of the digital input device in sleep mode, and / or the state duration of the second state of the electronic stylus with a second electrical capacitance can be longer than the duration of a touch measurement of the digital input device in active mode.

For example, the state duration of the first state of the electronic stylus with a first electrical capacitance can lie between 40 ms and 100 ms, preferably at 80 ms, and / or the state duration of the second state of the electronic stylus with a second electrical capacitance can lie between 15 ms and 35 ms, preferably at 30 ms.

A system according to the invention for performing and recognizing inputs to a digital input device with an electrically capacitively acting touch-sensitive input surface can inter alia comprise a digital input device with an electrically capacitively acting touch-sensitive input surface, as well as an electronic stylus for performing inputs to said digital input device.

Therein the electronic stylus can be configured such that the electronic stylus can assume at least two states with different electrical capacitances and is able to switch alternately between said different states with different electrical capacitances.

Furthermore, the electronic stylus can be configured for carrying out the switching between states of the electronic stylus with different electric capacitances such that the state duration for a first state with a first electrical capacitance can be longer than the state duration for a second state with a second electrical capacitance.

In addition, said electronic stylus of said system according to the invention can be configured such that the value of the first electrical capacitance of the first state of the electronic stylus can be larger than the value of the second electrical capacitance of the second state of the electronic stylus.

Under certain circumstances, an electronic stylus according to the invention or system or method according to the invention for performing inputs to a digital input device with an electrically capacitively acting touch-sensitive input surface, can perceive a first touch of the touch-sensitive input surface by the stylus as, for example, a first touch by a finger.

Possibly only due to an increase or clocking up of the measurement frequency, e.g. during a change into the active mode of the digital input device, it may be possible to distinguish the touch signals from stylus and finger.

A sufficiently high measurement frequency or active measurement frequency according to the sampling theorem of Shannon and Nyquist may lie, for example, at 60 Hz or higher.

An evaluation logic of the digital input device may therefore be configured to allow and track multiple interpretations of the touch event in parallel, until after a clocking up of the measuring frequency of measurement queries for changes in capacitance or capacitance measurements of the touch-sensitive input surface and a reasonable waiting period the decision as to the origin of a / the touch event can be made.

The following figures exemplary illustrate:

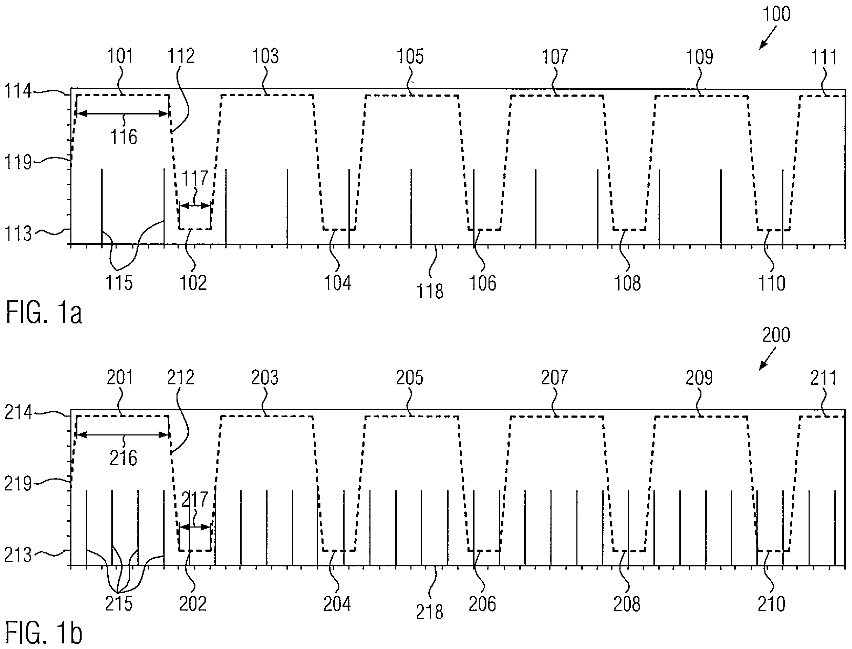

Fig. 1a: Exemplary capacitance state sequence of an electronic stylus with a digital input device in sleep mode
**Fig. 1b****:** Exemplary capacitance state sequence of an electronic stylus with a digital input device in active mode
Fig. 1a shows an example of a capacitance state sequence or a switching state sequence 100 of an electronic stylus according to the invention in interaction with a digital input device in sleep mode.

The ordinate 119 thereby represents examples of possible capacitance values of the electronic stylus, while the abscissa 118 represents a time axis.

The dashed line represents an example of a possible state sequence 100 of electrical capacitances of an electronic stylus according to the invention.

In said capacitance state sequence 100, states 101, 103, 105, 107, 109, 111 with a first, higher or larger capacitance with an exemplary value 114, alternate with states 102, 104, 106, 108, 110, with a second, lower or smaller capacitance with exemplary value 113.

The state duration of a state with a first, higher capacitance is exemplary denoted with reference numeral 116. All states with a first, higher capacitance can therefore have the same state duration 116.

The state duration of a state with a second, lower capacitance is exemplary denoted with reference numeral 117. All states with a second, lower capacitance can therefore have the same state duration 117.

However, the state durations of the capacitance states with a first capacitance may differ from the state durations of the capacitance states with a second capacitance.

In the present exemplary case, the state duration of capacitance states of a first capacitance state with a, higher, capacitance of the electronic stylus 114, is longer than the duration of a second capacitance state condition with a, lower, capacitance 113 of the electronic stylus.

The vertical lines illustrate exemplary measurement queries or measurement pulses or measurement points 115, with which a digital input device can query or measure capacitances or capacitance changes of its touch-sensitive input surface. In the present case, for example, the measurement queries can be made with the measurement frequency of the sleep mode of the digital input device.

Examples provided with reference numerals, are the measurement pulses 115, which detect and resolve the capacitance state or switching state 101 of the electronic stylus.

This advantageously has the result that even in a sleep mode of the digital input device, the states 101, 103, 105, 107, 109, 111 of the electronic stylus in a first capacitance state can be reliably detected and sufficiently accurately measured and resolved.

Reliable identification of a capacitance state or switching state, for example, a capacitance state with a first, higher, capacitance 114, may advantageously allow a change of the digital input device into the active mode with minimal latency.

In the present case, all capacitance states 101, 103, 105, 107, 109, 111 with a first, higher, capacitance 114 can be detected by the measurement pulses 115 of a digital input device in sleep mode.

The switching 112 between the capacitance states with a first capacitance and capacitance states with a second capacitance can occur almost instantaneously, for example, within a period shorter than 5 or 1 ms.

The advantage of this exemplary asymmetric capacitance state sequence or switching state sequence 100 is also, that even the majority, for example, here the capacitance states 104, 106 and 110 of the capacitance states 102, 104, 106, 108, 110 with a second, lower, capacitance 113 are detected by the measurement pulses 115 of a digital input device in sleep mode.

Fig. 1b shows an example of a capacitance state sequence or a switching state sequence 200 of an electronic stylus according to the invention in interaction with a digital input device in active mode.

The ordinate 219 represents analogously to Fig. 1a examples of possible capacitance values of the electronic stylus, whereas the abscissa 218 represents a time axis.

The dashed line represents again exemplary a possible state sequence 200 of electrical capacitances of an electronic stylus according to the invention, which for example can be analog or identical to the state sequence 100 from Fig. 1a.

In said capacitance state sequence 200, states 201, 203, 205, 207, 209, 211 with a first, higher or larger, capacitance with an exemplary value 214, alternate with states 202, 204, 206, 208, 210, with a second, lower or smaller capacitance with exemplary value 213.

A switching 212 between the capacitance states with a first capacitance and the capacitance states with a second capacitance, as previously mentioned, can occur almost instantaneously or not perceivable by the user.

The state duration of a state with a first, higher, capacitance is exemplary denoted with reference numeral 216. All states with a first, higher, capacitance can therefore have the same state duration 216.

The state duration of a state with a second, lower capacitance is exemplary denoted with reference numeral 217. All states with a second, lower capacitance can therefore have the same state duration 217.

However, the state durations of the capacitance states with a first capacitance may differ from the state durations of the capacitance states with a second capacitance.

In the present exemplary case, the state duration of capacitance states of a first capacitance state with a, higher, capacitance of the electronic stylus 214, is longer than the duration of a second capacitance state condition with a, lower, capacitance 213 of the electronic stylus.

Therein vertical lines again illustrate exemplary measurement queries or measurement pulses or measurement points 215, with which a digital input device can query or measure capacitances or capacitance changes of its touch-sensitive input surface.

However, in contrast to the exemplary scenario of Fig. 1a, the digital input device is now in active mode and queries the capacitance state of an electronic stylus with a measurement frequency that is higher than compared to the sleep mode measurement frequency.

The measurement frequency in the active mode allows that for each switching state or capacitance state 201, 202, 203, 204, 205, 206, 207, 208, 209, 210, 211 at least one measurement or measuring query 215 can be carried out.

In other words advantageously all or almost all touch signals of an electronic stylus according to the invention on the touch-sensitive input surface of a digital input device can be detected and resolved in the active mode of the digital input device.

Followed by one sheet with two figures. The reference numerals identify the following components:
**100** capacitance state sequence or switching state sequence of an electronic stylus according to the invention
**101, 103, 105, 107, 109, 111** capacitance state or switching state of an electronic stylus with a first, higher or larger capacitance
**102, 104, 106, 108, 110** capacitance state or switching state of an electronic stylus with a second, lower or smaller capacitance
**112** switching between a capacitance state with a first capacitance and a capacitance state with a second capacitance
**113** capacitance or capacitance value
**114** capacitance or capacitance value
**115** measurement query / measurement queries or measurement pulse / measurement pulses
**116** state duration of a state of an electronic stylus according to the invention with a first, e.g. higher, capacitance
**117** state duration of a state of an electronic stylus according to the invention with a second, e.g. lower, capacitance
**118** abscissa, for example timeline
**119** ordinate, for example capacitance axis
**200** capacitance state sequence or switching state sequence of an electronic stylus according to the invention
**201, 203, 205, 207, 209, 211** capacitance state or switching state of an electronic stylus with a first, higher or larger capacitance
**202, 204, 206, 208, 120** capacitance state or switching state of an electronic stylus with a second, lower or smaller capacitance
**212** switching between a capacitance state with a first capacitance and a capacitance state with a second capacitance
**213** capacitance or capacitance value
**214** capacitance or capacitance value
**215** measurement query / measurement queries or measurement pulse / measurement pulses
**216** state duration of a state of an electronic stylus according to the invention with a first, e.g. higher, capacitance
**217** state duration of a state of an electronic stylus according to the invention with a second, e.g. lower, capacitance
**218** abscissa, for example timeline
**219** ordinate, for example capacitance axis

## Claims

1. Electronic stylus for performing inputs to a digital input device with an electrically capacitively acting touch-sensitive input surface, wherein the electronic stylus is configured for assuming at least two states (101, 102) with different electrical capacitances (114, 113) and for switching alternately between said different states (101, 102) with different electrical capacitances (114, 113),
**characterised in that**
the electronic stylus is configured for carrying out the switching (112) between states (101, 102) of the electronic stylus with different electric capacitances (114, 113) such that the state duration (116) for a first state (101) with a first electrical capacitance (114) is longer than the state duration (117) for a second state (102) with a second electrical capacitance (113).

2. Electronic stylus according to claim 1, **characterised in that** the electronic stylus is configured such that the value (114) of the first electrical capacitance of the first state (101) of the electronic stylus is larger than the value (113) of the second electrical capacitance of the second state (102) of the electronic stylus.

3. Electronic stylus according to one of the preceding claims **characterised in that** the electronic stylus comprises a writing pressure sensor and is configured for adjusting the state duration (116) of the state (101) of the electronic stylus with a first electrical capacitance (114) in dependence of a writing pressure measured by said writing pressure sensor.

4. Electronic stylus according to one of the preceding claims, **characterised in that** the electronic stylus comprises a manually operable option switch, wherein said option switch can be configured to set the state duration (116) of the state (101) of the electronic stylus with a first electrical capacitance (114), and wherein said option switch may be implemented as a switch, a button, a touch-sensitive surface or as a proximity sensor.

5. Method for performing inputs to a digital input device with an electrically capacitively acting touch-sensitive input surface via an electronic stylus, comprising:
an alternating switching (112) of the electronic stylus between a first state (101) of the electronic stylus with a first electrical capacitance (114) and a second state (102) of the electronic stylus with a second electrical capacitance (113), and **characterised in that** the state duration (116) for the first state (101) with the first electrical capacitance (114) is longer than the state duration (117) of the second state (102) with the second electrical capacitance (113).

6. Method according to claim 5, wherein the value (114) of the first electrical capacitance of the first state (101) of the electronic stylus is larger than the value (113) of the second electrical capacitance of the second state (102) of the electronic stylus.

7. Method according to one of the claims 5 or 6, wherein the digital input device has a sleep mode and an active mode, wherein in the active mode the measurement frequency for measuring changes in capacitance on the touch-sensitive input surface lies above the measurement frequency to measure changes in capacitance on the touch-sensitive in the sleep mode, and wherein
the state duration (116) of the first state (101) of the electronic stylus with a first electrical capacitance (114) is longer than the duration of a measurement cycle of the digital input device in sleep mode, and / or
the state duration (117) of the second state (102) of the electronic stylus with a second electrical capacitance (113) is longer than the duration of a touch measurement of the digital input device in active mode.

8. Method according to one of the claims 5 or 6 or 7, wherein the state duration (116) of the first state (101) of the electronic stylus with a first electrical capacitance (114) lies between 40 ms and 100 ms, preferably at 80 ms, and / or the state duration (117) of the second state (102) of the electronic stylus with a second electrical capacitance (113) lies between 15 ms and 35 ms, preferably at 30 ms.

9. System for performing and recognizing inputs to a digital input device with an electrically capacitively acting touch-sensitive input surface, comprising:
a digital input device with an electrically capacitively acting touch-sensitive input surface, an electronic stylus for performing inputs to said digital input device,
wherein the electronic stylus is configured for assuming at least two states (101, 102) with different electrical capacitances (114, 113) and for switching (112) alternately between said different states (101, 102) with different electrical capacitances (114, 113), and
**characterised in that**
the electronic stylus is configured for carrying out the switching (112) between states (101, 102) of the electronic stylus with different electric capacitances (114, 113) such that the state duration (116) for a first state (101) with a first electrical capacitance (114) is longer than the state duration (117) for a second state (102) with a second electrical capacitance (113).

10. System according to claim 9, configured such that the value (114) of the first electrical capacitance of the first state (101) of the electronic stylus is larger than the value (113) of the second electrical capacitance of the second state (102) of the electronic stylus.

## Patentansprüche

1. Elektronischer Griffel zur Durchführung von Eingaben an einem digitalen Eingabegerät mit elektrisch kapazitiv wirkender berührungsempfindlicher Eingabeoberfläche, wobei der elektronische Griffel dazu konfiguriert ist, wenigstens zwei Zustände (101, 102) mit verschiedenen elektrischen Kapazitäten (114, 113) anzunehmen und zwischen besagten verschiedenen Zuständen (101, 102) mit verschiedenen elektrischen Kapazitäten (114, 113) alternierend umschalten zu können,
**dadurch gekennzeichnet, dass**
der elektronische Griffel dazu konfiguriert ist, das Umschalten (112) zwischen den Zuständen (101, 102) des elektronischen Griffels mit verschiedenen elektrischen Kapazitäten (114, 113) so auszuführen, dass die Zustandsdauer (116) für einen ersten Zustand (101) mit einer ersten elektrischen Kapazität (114) länger ist, als die Zustandsdauer (117) für einen zweiten Zustand (102) mit einer zweiten elektrischen Kapazität (113).

2. Elektronischer Griffel nach Anspruch 1, dadurch charakterisiert, dass der elektronische Griffel so konfiguriert ist, dass der Wert (114) der ersten elektrischen Kapazität des ersten Zustandes (101) des elektronischen Griffels größer ist, als der Wert (113) der zweiten elektrischen Kapazität des zweiten Zustandes (102) des elektronischen Griffels.

3. Elektronischer Griffel nach einem der vorherigen Ansprüche, dadurch charakterisiert, dass der elektronische Griffel einen Schreibdrucksensor aufweist, sowie dazu konfiguriert ist, die Zustandsdauer (116) für den Zustand (101) des elektronischen Griffels mit einer ersten elektrischen Kapazität (114) in Abhängigkeit eines durch besagten Schreibdrucksensor gemessenen Schreibdrucks einzustellen.

4. Elektronischer Griffel nach einem der vorherigen Ansprüche, dadurch charakterisiert, dass der elektronische Griffel einen manuell betätigbaren Optionsschalter aufweist, wobei der Optionsschalter konfiguriert ist, die Zustandsdauer (116) für den Zustand (101) des elektronischen Griffels mit einer ersten elektrischen Kapazität (114) einzustellen und wobei besagter Optionsschalter als Schalter, als Taster, als berührungsempfindliche Fläche oder als Annäherungssensor ausgeführt sein kann.

5. Verfahren zur Durchführung von Eingaben an einem digitalen Eingabegerät mit elektrisch kapazitiv wirkender berührungsempfindlicher Eingabeoberfläche mittels eines elektronischen Griffels umfassend:
Ein alternierendes Umschalten (112) des elektronischen Griffels zwischen einem ersten Zustand (101) des elektronischen Griffels mit einer ersten elektrischen Kapazität (114) und einem zweiten Zustand (102) des elektronischen Griffels mit einer zweiten elektrischen Kapazität (113), und **dadurch gekennzeichnet, dass**
die Zustandsdauer (116) für den ersten Zustand (101) mit der ersten elektrischen Kapazität (114) länger ist, als die Zustandsdauer (117) für den zweiten Zustand (102) mit der zweiten elektrischen Kapazität (113).

6. Verfahren nach Anspruch 5, worin der Wert (114) der ersten elektrischen Kapazität des ersten Zustandes (101) des elektronischen Griffels größer ist, als der Wert (113) der zweiten elektrischen Kapazität des zweiten Zustandes (102) des elektronischen Griffels.

7. Verfahren nach einem der Ansprüche 5 oder 6, worin das digitale Eingabegerät einen Ruhemodus und einen Aktivmodus aufweist, wobei im Aktivmodus die Messfrequenz zum Messen von Kapazitätsänderungen auf der berührungsempfindlichen Eingabeoberfläche, über der Messfrequenz zum Messen von Kapazitätsänderungen auf der berührungsempfindlichen Eingabeoberfläche im Ruhemodus liegt, und wobei
die Zustandsdauer (116) des ersten Zustands (101) des elektronischen Griffels mit einer ersten elektrischen Kapazität (114) länger ist, als die Dauer eines Messzyklus des digitalen Eingabegerätes im Ruhemodus, und/oder
die Zustandsdauer (117) des zweiten Zustands (102) des elektronischen Griffels mit einer zweiten elektrischen Kapazität (113) länger ist, als die Dauer einer Berührungsmessung des digitalen Eingabegerätes im Aktivmodus.

8. Verfahren nach einem der Ansprüche 5 oder 6 oder 7, worin die Zustandsdauer (116) des ersten Zustands (101) des elektronischen Griffels mit einer ersten elektrischen Kapazität (114) zwischen 40 ms und 100 ms, bevorzugt bei 80 ms, liegt, und/oder die Zustandsdauer (117) des zweiten Zustands (102) des elektronischen Griffels mit einer zweiten elektrischen Kapazität (113) zwischen 15 ms und 35 ms, bevorzugt bei 30 ms, liegt.

9. System zur Durchführung und Erfassung von Eingaben an einem digitalen Eingabegerät mit elektrisch kapazitiv wirkender berührungsempfindlicher Eingabeoberfläche, umfassend:
ein digitales Eingabegerät mit elektrisch kapazitiv wirkender berührungsempfindlicher Eingabeoberfläche, einen elektronischen Griffel zur Durchführung von Eingaben an dem besagten digitalen Eingabegerät,
wobei der elektronische Griffel dazu konfiguriert ist, wenigstens zwei Zustände (101, 102) mit verschiedenen elektrischen Kapazitäten (114, 113) anzunehmen und zwischen besagten verschiedenen Zuständen (101, 102) mit verschiedenen elektrischen Kapazitäten (114, 113) alternierend umschalten (112) zu können, und **dadurch gekennzeichnet, dass**
der elektronische Griffel dazu konfiguriert ist, das Umschalten (112) zwischen den Zuständen (101, 102) des elektronischen Griffels mit verschiedenen elektrischen Kapazitäten (114, 113) so auszuführen, dass die Zustandsdauer (116) für einen ersten Zustand (101) mit einer ersten elektrischen Kapazität (114) länger ist, als die Zustandsdauer (117) für einen zweiten Zustand (102) mit einer zweiten elektrischen Kapazität (113).

10. System nach Anspruch 9, so konfiguriert, dass der Wert (114) der ersten elektrischen Kapazität des ersten Zustandes (101) des elektronischen Griffels größer ist, als der Wert (113) der zweiten elektrischen Kapazität des zweiten Zustandes (102) des elektronischen Griffels.

## Revendications

1. Stylet électronique pour effectuer des entrées dans un dispositif d'entrée numérique avec un surface d'entrée tactile à action capacitive, dans laquelle le stylet électronique est configuré pour prendre au moins deux états (101, 102) avec différentes capacités électriques (114, 113) et pour commuter alternativement entre lesdits états différents (101, 102) avec des capacités électriques différentes (114, 113),
**caractérisé en ce que**
le stylet électronique est configuré pour effectuer la commutation (112) entre les états (101, 102) du stylet électronique avec différentes capacités électriques (114, 113) de sorte que la durée d'état (116) pour un premier état (101) avec la première capacité électrique (114) est plus longue que la durée d'état (117) pour un second état (102) avec une seconde capacité électrique (113).

2. Stylet électronique selon la revendication 1, **caractérisé en ce que** le stylet électronique est configuré de telle sorte que la valeur (114) de la première capacité électrique du premier l'état (101) du stylet électronique est supérieure à la valeur (113) de la seconde capacité électrique du second état (102) du stylet électronique.

3. Stylet électronique selon l'une des revendications précédentes, **caractérisé en ce que** le stylet électronique comprend un capteur de pression d'écriture et est configuré pour régler la durée d'état (116) de l'état (101) du stylet électronique avec une première capacité électrique (114) en fonction d'une pression d'écriture mesurée par ledit capteur de pression d'écriture.

4. Stylet électronique selon l'une des revendications précédentes, **caractérisé en ce que** le stylet électronique comprend un commutateur d'option à commande manuelle, dans lequel ledit commutateur d'option peut être configuré pour définir la durée d'état (116) de l'état (101) du stylet électronique avec une première capacité électrique (114), et dans lequel ledit commutateur d'option peut être mis en oeuvre comme commutateur, comme bouton, comme surface tactile ou comme capteur de proximité.

5. Procédé pour effectuer des entrées dans un dispositif d'entrée numérique avec une surface d'entrée tactile agissant de manière électriquement capacitive par le biais d'un stylet électronique, comprenant:
une commutation alternée (112) du stylet électronique entre un premier état (101) du stylet électronique avec une première capacité électrique (114) et un second état (102) du stylet électronique avec une seconde capacité électrique (113), et
**caractérisé en ce que**
la durée d'état (116) pour le premier état (101) avec la première capacité électrique (114) est plus longue que la durée d'état (117) du second état (102) avec la seconde capacité électrique (113).

6. Procédé selon la revendication 5, où la valeur (114) de la première capacité électrique du premier état (101) du stylet électronique est plus grande que la valeur (113) de la seconde capacité électrique du second état (102) du stylet électronique.

7. Procédé selon l'une des revendications 5 ou 6, dans lequel le dispositif d'entrée numérique possède une mode veille et un mode actif, dans lequel, dans le mode actif, la fréquence de mesure pour mesurer les changements de capacité sur la surface d'entrée tactile est supérieure à la fréquence de mesure pour mesurer les changements de capacité sur ladite surface tactile en mode veille, et dans lequel la durée d'état (116) du premier état (101) du stylet électronique avec une première capacité électrique (114) est plus longue que la durée d'un cycle de mesure du dispositif d'entrée numérique en mode veille, et/ou
la durée d'état (117) du second état (102) du stylet électronique avec une seconde capacité électrique (113) est plus longue que la durée d'un cycle de mesure du dispositif d'entrée numérique en mode actif.

8. Procédé selon l'une des revendications 5 ou 6 ou 7, dans lequel la durée d'état (116) du premier état (101) du stylet électronique avec une première capacité électrique (114) se situe entre 40 ms et 100 ms, de préférence à 80 ms, et/ou la durée d'état (117) du second état (102) du stylet électronique avec une seconde capacité électrique (113) est comprise entre 15 ms et 35 ms, de préférence à 30 ms.

9. Système pour exécuter et reconnaître des entrées sur un dispositif d'entrée numérique avec une surface d'entrée tactile agissant de manière électriquement capacitive, comprenant:
un dispositif d'entrée numérique avec une surface d'entrée tactile agissant de manière électriquement capacitive, un stylet électronique pour exécuter des entrées vers ledit dispositif d'entrée numérique,
dans lequel le stylet électronique est configuré pour adopter au moins deux états (101, 102) avec des capacités électriques différentes (114, 113) et pour commuter (112) de manière alternée entre différents états (101, 102) avec différentes capacités électriques (114, 113), et
**caractérisé en ce que**
le stylet électronique est configuré pour effectuer la commutation (112) entre les états (101, 102) du stylet électronique avec différentes capacités électriques (114, 113) de sorte que la durée d'état (116) pour un premier état (101) avec une première capacité électrique (114) est plus longue que la durée d'état (117) pour un second état (102) avec une seconde capacité électrique (113).

10. Système selon la revendication 9, configuré de telle sorte que la valeur (114) de la première capacité électrique du premier état (101) du stylet électronique est plus grande que la valeur (113) de la seconde capacité électrique du second état (102) du stylet électronique.
